(19) Europäisches Patentamt
European Patent Office
Office européen des brevets

(11) Publication number : 0 686 347 A2

(12) **EUROPEAN PATENT APPLICATION**

(21) Application number : 95303758.7

(22) Date of filing : 01.06.95

(51) Int. Cl.[6] : A01N 43/80, A01N 43/32, A01N 25/22

(30) Priority : 08.06.94 US 255503

(43) Date of publication of application : 13.12.95 Bulletin 95/50

(84) Designated Contracting States : AT BE CH DE DK ES FR GB GR IE IT LI LU NL PT SE

(71) Applicant : ROHM AND HAAS COMPANY
100 Independence Mall West
Philadelphia, Pennsylvania 19106-2399 (US)

(72) Inventor : Yu, Bing
3 Downey Drive
Horsham, Pennsylvania 19044 (US)

(74) Representative : Smith, Julian Philip Howard et al
Rohm and Haas (UK) Limited,
European Operations Patent Dept.,
Lennig House,
2 Masons Avenue
Croydon CR9 3NB (GB)

(54) **Composition containing 3-isothialozolone and stabilizer**

(57) 3-Isothiazolone compositions which are stable, free from turbidity, and do not corrode metal storage containers are disclosed. They contain as stabilisers hexamethylenetetramine and 5-bromo-5-nitro-1,3-dioxane.

EP 0 686 347 A2

This invention relates to the stabilization of a 3-isothiazolone biocide preparation free of metal salt, and particularly to the stabilization of a mixed preparation of 5-chloro-2-methyl-4-isothiazolin-3-one ("CMI" or 5-chloro-2-methyl-3-isothiazolone) and 2-methyl-4-isothiazolin-3-one ("MI" or 2-methyl-3-isothiazolone).

3-isothiazolones have been extensively used mainly as a bactericide, mildewcide or algaecide against microorganisms for industrial aqueous and non-aqueous products. When substituted with an appropriate functional group, 3-isothiazolones are very effective biocides and are widely used.

"Biocide" is used herein to include bactericide, germicide, slime control agent and algaecide, and has microbicidal and microbistatic effects.

The activity of 3-isothiazolone preparations is reduced during storage or when added to a substrate to be treated. This is because the 3-isothiazolone is not stable enough to be stored for a long time under typical storage conditions. Therefore, a process for improving the stability of 3-isothiazolone has been sought. Preparations which have been made commercially available include (1) a preparation prepared by adding water as a solvent to a mixture of CMI and MI with metal nitrate as a stabilizer (U.S. 3,870,795 and U.S. 4,067,878), (2) a preparation prepared by adding glycol as a solvent and orthoesters as a stabilizer (U.S 4,906,274), (3) a preparation prepared by adding glycol as a solvent but not including a stabilizer, and (4) a preparation prepared by adding glycol and/or water as a solvent and a certain type of nitrobromo compound as a stabilizer. In recent years, a preparation using glycol or water as a solvent and hexamethylenetetramine (HMT) as a stabilizer has been proposed (U.S. 5,242,893).

When the 3-isothiazolone preparation of (1), (2) or (3) described above is used in a polymer emulsion or paint or aqueous adhesive using the polymer emulsion as a substrate, there have been unfavourable phenomena such as coagulation of the latex and phase separation. The causes of such phenomena are considered to be the metal nitrate salt or organic solvent that locally contacts with the emulsion at a high concentration or is insoluble in a non aqueous medium. Metal nitrate salts have a further drawback in that they can form a carcinogen, nitrosamine, in 3-isothiazolone compositions containing nitrosamine precursors. Some of the prior art compositions are corrosive to steel.

Therefore, isothiazolone preparations have been demanded which can be stored for a long period, as described above, without resulting in turbidity or a precipitate and which are noncorrosive to steel. Accordingly the present invention provices a composition comprising:

(a) at least one 3-isothiazolone biocide having the general formula (I):

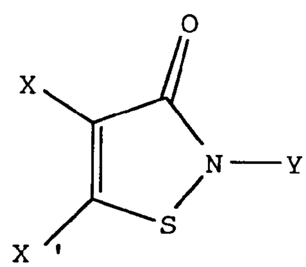

(I

wherein X and X' rare independently selected from the group consisting of hydrogen or halogen;

Y is hydrogen or an alkyl group;

(b) hexamethylenetetramine;

(c) 5-bromo-5-nitro-1,3-dioxane; and

(d) a water miscible organic solvent, optionally mixed with water.

The 3-isothiazolone in the compositions of this invention is stable for a long period, and does not form a precipitate. Therefore, the composition of this invention can be used in the same way as conventional biocides, and particularly may be used for polymeric emulsion, paint, adhesive, pigment, treating solution for printing matrix, cooling water, white water in paper making process, and cosmetics, and more preferably used for synthetic polymer emulsion, water-based paint, cutting lubricant and others. When aqueous biocidal compositions are used in polymer emulsions, it is desirable that the emulsion does not gel and that metal storage containers are not corroded.

Suitable 3-isothiazolones include, for example, 5-chloro-2-methyl-4-isothiazolin-3-one, 2-methyl-4-isothiazolin-3-one, 4-chloro-2-methyl-4-isothiazolin-3-one, 4,5-dichloro-2-methyl-4-isothiazolin-3-one, 5-bromo-2-methyl-4-isothiazolin-3-one, or mixtures thereof. A mixture of 5-chloro-2-methyl-4-isothiazolin-3-one and 2-methyl-4-isothiazolin-3-one at a ratio of from 3:1 to 10:1 is preferred. Such 3-isothiazolone compounds are preferably present at a level of 10% or less in the composition.

HMT (b) is added to the 3-isothiazolone (a) as a stabilizer. The HMT in the composition is from 0.01 to

1.0% by weight, and preferably from 0.05 to 0.5% by weight of the composition of the invention.

5-bromo-5-nitro-1,3-dioxane, which is added as a third component (c), is also broadly used as an industrial biocide. 5-bromo-5-nitro-1,3-dioxane is present in the composition from 0.1 to 1.0% by weight, and preferably from 0.4 to 1.0% by weight of the composition of the invention.

For the compositions of this invention, a water miscible organic solvent or a mixture of water and said water miscible organic solvent sufficient to dissolve the above components (a), (b) and (c) is used. Suitable water miscible organic solvents are glycol-based solvents. Ethylene glycol, dipropylene glycol and diethylene glycol are preferred. They have been broadly used as solvents for 3-isothiazolone based compounds.

The compositions of this invention are formed by adding the other components of this invention to a preparation which contains the 3-isothiazolone. For example, to a 3-isothiazolone preparation containing glycol-based solvent, the remaining components may be added; or to this 3-isothiazolone preparation, HMT or 5-bromo-5-nitro-1,3-dioxane may be added successively to produce the composition. Obviously, these components (a) through (c) may be added simultaneously.

Examples of this invention will be described below. It is to be understood that these examples do not restrict the present invention except for being restricted by the claims. Unless otherwise specified, all percentages are by weight, and the reagents are of commercially available grade.

Example 1

A mixture consisting of CMI and MI in a ratio of 3 : 1 (a product of Rohm and Haas Company, USA) was dissolved in dipropylene glycol to prepare a solution having a concentration of 25%. To this solution, 5-bromo-5-nitro-1,3-dioxane, hexamethylenetetramine (made by Kanto Chemical Co., Ltd.) and water were added to prepare the following test solutions as shown in Table I.

**TABLE I**

| Test solution | % 3-Isothiazolone | % 5-Bromo-5-nitro-1,3-dioxane | % HMT |
|---|---|---|---|
| 1-1# | 6.63 | 0.8 | - |
| 1-2# | 6.63 | - | 1.0 |
| 1-3 | 6.63 | 0.2 | 0.05 |
| 1-4 | 6.63 | 0.2 | 0.1 |
| 1-5 | 6.63 | 0.2 | 0.5 |
| 1-6 | 6.63 | 0.2 | 1.0 |
| 1-7 | 6.63 | 0.4 | 0.05 |
| 1-8 | 6.63 | 0.4 | 0.1 |
| 1-9 | 6.63 | 0.4 | 0.5 |
| 1-10 | 6.63 | 0.4 | 1.0 |
| 1-11 | 6.63 | 0.4 | 1.2 |
| 1-12 | 6.63 | 0.6 | 0.05 |
| 1-13 | 6.63 | 0.6 | 0.1 |
| 1-14 | 6.63 | 0.6 | 0.5 |
| 1-15 | 6.63 | 0.6 | 1.0 |
| 1-16 | 6.63 | 0.6 | 1.2 |

# = Comparative

The test solutions were stored at 40° C for 4 weeks. The solutions analyzed for % CMI remaining, turbidity, and precipitate formation. The results are shown in Tables II and III.

**TABLE II**

% CMI Remaining After Storage at 40° C

| Test Solution | 1 Week | 2 Weeks | 3 Weeks | 4 Weeks |
|---|---|---|---|---|
| 1-1# | 100 | 99.8 | 98.6 | 97.2 |
| 1-2# | 97.0 | 89.0 | 71.9 | 64.4 |
| 1-3 | 100 | 99.4 | 98.6 | 98.5 |
| 1-4 | 100 | 99.8 | 98.6 | 98.4 |
| 1-5 | 100 | 99.6 | 99.4 | 99.2 |
| 1-6 | 100 | 99.7 | 99.5 | 99.1 |
| 1-7 | 100 | 99.4 | 99.3 | 99.1 |
| 1-8 | 100 | 98.6 | 98.0 | 97.6 |
| 1-9 | 100 | 99.5 | 97.8 | 97.5 |
| 1-10 | 100 | 97.4 | 97.2 | 95.8 |
| 1-11 | 100 | 99.4 | 96.9 | 96.5 |
| 1-12 | 100 | 98.4 | 96.6 | 96.3 |
| 1-13 | 100 | 99.4 | 98.8 | 98.0 |
| 1-14 | 100 | 99.0 | 98 0 | 98.0 |
| 1-15 | 100 | 99.7 | 98.0 | 98.6 |
| 1-16 | 100 | 99.0 | 98.4 | 96.8 |

# = Comparative

**TABLE III**

Turbidity and Precipitate Formation in Test Solutions After Storage at 40° C

| Test Solution | 0 Week | 1 Week | 2 Weeks | 3 Weeks | 4 Weeks |
|---|---|---|---|---|---|
| 1-1# | 0 | 0+ | 0+ | 0++ | 0+++ |
| 1-2# | 0 | 0+ | 0+ | 0++ | 2+++ |
| Control* | 0 | 2+ | 2++ | 2+++ | 2+++ |
| 1-3 | 0 | 0+ | 0+ | 0++ | 0++ |
| 1-4 | 0 | 0 | 0 | 0 | 0 |
| 1-5 | 0 | 0 | 0+ | 0++ | 0+ |
| 1-6 | 0 | 0 | 0+ | 0++ | 0+ |
| 1-7 | 0 | 0 | 0 | 0 | 0 |
| 1-8 | 0 | 0 | 0 | 0 | 0+ |
| 1-9 | 0 | 0 | 0 | 0 | 0+ |
| 1-10 | 0 | 0 | 0 | 0 | 0+ |
| 1-11 | 0 | 0 | 0 | 0 | 0++ |
| 1-12 | 0 | 0 | 0 | 0 | 0+ |
| 1-13 | 0 | 0 | 0 | 0 | 0+ |
| 1 -14 | 0 | 0 | 0 | 0 | 0+ |
| 1-15 | 0 | 0 | 0 | 0 | 0+ |
| 1 -16 | 0 | 0 | 0 | 0 | 0++ |

# = Comparative

* The control contained only 3-isothiazolone diluted with water.

The numerical values describing the test results in the Table III are as follows:

| Turbidity | Precipitate Formation |
|---|---|
| 0 : Completely clear | + : Little precipitate |
| 1 : Slightly turbid | ++ : Some precipitate |
| 2 : Turbid | +++ : A lot of precipitate |

## Example 2

The same procedure as described in Example 1 was used to prepare the following seven test solutions as described in Table IV.

**TABLE IV**

| Test solution | % 3-Isothiazolone | % 5-Bromo-5-nitro 1,3-dioxane | % HMT |
|---|---|---|---|
| 2-1# | 6.63 | 0 | 0 |
| 2-2# | 6.63 | 0.8 | 0 |
| 2-3 | 6.63 | 0.8 | 0.01 |
| 2-4 | 6.63 | 0.8 | 0.05 |
| 2-5 | 6.63 | 0.8 | 0.1 |
| 2-6 | 6.63 | 0.8 | 0.5 |
| 2-7 | 6.63 | 0.8 | 1 0 |

# = Comparative

Corrosivity of the test solutions was examined by placing coupons of SUS stainless steel in the test solutions. The test solutions were allowed to stand at 40° C for 4 weeks. After this time, the test solutions were examined for CMI remaining, turbidity and precipitate formation. The results are shown in Table V.

**TABLE V**

| Test Solution | % CMI Remaining | | | | Corrosion Resistance | | Turbidity and Precipitate Formation | |
|---|---|---|---|---|---|---|---|---|
| | 1 Week | 2 Weeks | 3 Weeks | 4 Weeks | 1 Week | 4 Weeks | 1 Week | 4 Weeks |
| 2-1# | 98 | 86 | 78 | 69 | + | + | 0 | 2+++ |
| 2-2# | 100 | 96 | 96 | 95 | + | + | 0 | 2+++ |
| 2-3 | 100 | 95 | 95 | 94 | - | - | 0 | 0 |
| 2-4 | 100 | 96 | 94 | 94 | - | - | 0 | 0 |
| 2-5 | 96 | 95 | 95 | 95 | - | - | 0 | 0 |
| 2-6 | 100 | 95 | 95 | 95 | - | - | 0 | 0 |
| 2-7 | 100 | 95 | 95 | 95 | - | - | 0 | 0 |

# = Comparative

The numerical values describing the test results in the Table V are as follows:

| Corrosion Resistance | Turbidity | Precipitate Formation |
|---|---|---|
| + : Corrosion present | 0 : Completely clear | + : Little precipitate |
| - : No corrosion | 1 : Slightly turbid | ++ : Some precipitate |
| | 2 : Turbid | +++ : A lot of precipitate |

Test solutions 3, 4, 5, 6 and 7 appeared transparent, free from turbidity and any precipitate formation. Stainless steel coupons in test solutions 1 and 2 showed evidence of corrosion. Stainless steel coupons in test solutions 3, 4, 5, 6 and 7 showed no evidence of corrosion.

As is obvious from the examples, this invention has made it possible to provide a 3-isothiazolone biocide composition which, when diluted with water, retains biocidal activity for a long period of time, remains free of

precipitate formation and is stable. This invention is particularly significant for the supply of a commercial biocide for latexes.

## Claims

1. Composition comprising:
(a) at least one 3-isothiazolone biocide having the general formula (I):

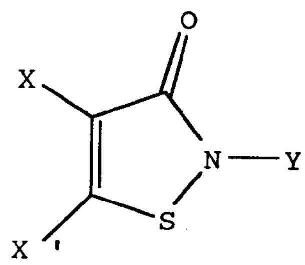

(I

wherein X and X' rare independently selected from the group consisting of hydrogen or halogen;
Y is hydrogen or an alkyl group;
(b) hexamethylenetetramine;
(c) 5-bromo-5-nitro-1,3-dioxane; and
(d) a water miscible organic solvent, optionally mixed with water.

2. Composition according to claim 1, wherein said 3-isothiazolone biocide comprises a mixture of 5-chloro-2-methyl-4-isothiazolin-3-one and 2-methyl-4-isothiazolin-3-one at a ratio of from 3:1 to 10:1.

3. Composition according to claim 1 or 2, wherein the amount of hexamethylenetetramine is from 0.01 to 1.0% by weight.

4. Composition according to claim 3, wherein the amount of hexamethylenetetramine is from 0.05 to 0.5% by weight.

5. Composition according to any preceding claim, wherein the amount of 5-bromo-5-nitro-1,3-dioxane is from 0.1 to 1.0% by weight, preferably from 0.4 to 1.0% by weight.

6. Composition according to any preceding claim, wherein said water miscible organic solvent is dipropylene glycol.

7. Method of stabilising a 3-isothiazolone composition against decomposition, precipitate formation and/or turbidity formation, comprising incorporating therewith hexamethylenetetramine and 5-bromo-5-nitro-1,3-dioxane.

8. Use of hexamethylenetetramine and 5-bromo-5-nitro-1,3-dioxane to stabilise a 3-isothiazolone composition.